# FASCICULE DE BREVET EUROPEEN

(11) **EP 1 403 608 B1**
(45) Date de publication et mention de la délivrance du brevet: **02.04.2008**
(21) Numéro de dépôt: 03362018.8
(22) Date de dépôt: 29.09.2003
(51) Int. Cl.: F28F 13/12, F24F 3/06

(54) **Dispositif de climatisation**
Klimaanlage
Air conditioning device

(30) Priorité: 27.09.2002 FR 0211986
(43) Date de publication de la demande: 31.03.2004
(60) Demande divisionnaire: 07117284.5
(73) Titulaire: Airmat, 40990 Herm (FR)
(72) Inventeur: Ivars, Luc, F-40990 Saint-Paul-les Dax (FR); Ivars, Paul, F-40990 Herm (FR); Ivars, Marc, F-40140 Magescq (FR)
(74) Mandataire: Fantin, Laurent

(56) Documents cités:
- DE-A- 2 655 143
- DE-U- 29 823 175
- US-A- 2 555 012
- US-A- 2 984 460

## Description

La présente invention se rapporte à un dispositif de climatisation, de préférence réversible, plus particulièrement destiné aux maisons d'habitations.

Selon l'art antérieur, il existe deux familles de dispositifs de climatisation.

Les dispositifs de la première famille comprennent des moyens susceptibles de refroidir un fluide caloporteur circulant dans un circuit alimentant un ou plusieurs échangeurs disposés à l'intérieur de l'habitation.

De préférence, le fluide caloporteur est du fréon refroidi par un groupe froid, disposé à l'extérieur du bâtiment, fonctionnant selon un régime stable, à débit sensiblement constant.

Cette solution ne donne pas satisfaction lorsque le circuit comprend plusieurs échangeurs, ces derniers devant fonctionner tous de manière identique à un régime fixe pré-établi. Ainsi, il n'est pas possible de régler de manière indépendante les échangeurs.

Les dispositifs de la seconde famille plus souple d'utilisation permettent de pallier cet inconvénient. A cet effet, ils comprennent :
- un premier circuit dans lequel circule un fluide caloporteur de type fréon refroidi par un groupe froid, disposé à l'extérieur et susceptible d'alimenter un premier échangeur,
- un deuxième circuit dans lequel circule grâce à une pompe, un deuxième fluide caloporteur, en général de l'eau, susceptible d'être refroidi en traversant le premier échangeur et de refroidir l'eau présente dans un réservoir,
- un troisième circuit relié audit réservoir dans lequel circule de l'eau susceptible de traverser des échangeurs disposés dans les différentes pièces de l'habitation.

Dans ce cas, le troisième circuit permet de pouvoir régler les échangeurs de manière différente, tout en ayant un régime constant au niveau du premier circuit.

Malgré la souplesse d'utilisation procurée, cette solution ne donne pas pleinement satisfaction car elle nécessite une installation complexe et coûteuse, mal adaptée au marché de l'habitat.

Le document US-5.165.472 décrit un échangeur placé dans un dispositif de chauffage qui comprend :
- un premier circuit dans lequel circule un premier fluide caloporteur, comportant des moyens pour refroidir ou/et chauffer le premier fluide,
- un second circuit dans lequel circule un second fluide caloporteur avec au moins un réservoir formant un échangeur fluide/fluide,
- une portion dudit premier circuit disposée dans ledit échangeur,
- des moyens d'agitation du second fluide caloporteur réalisés par des moyens d'injection du second fluide caloporteur dans le réservoir.

L'échangeur fluide/fluide décrit dans ce document comprend des moyens d'injection sous la forme d'un tuyau en forme de boucle, disposé en partie inférieure d'un réservoir, dans un plan sensiblement parallèle au fond dudit réservoir. Ce tuyau comprend deux séries d'orifices réparties au niveau de sa paroi latérale. Les orifices de la première série sont orientés vers le haut de manière à propulser le fluide verticalement, dans un plan perpendiculaire au plan du tuyau afin d'obtenir un flux ascendant vertical concentrique à la paroi verticale du réservoir.

Les orifices de la seconde série sont orientés vers le centre et permettent de générer des flux perturbés mais pas un mouvement hélicoïdal.

Aussi, la présente invention vise à pallier les inconvénients de l'art antérieur en proposant un dispositif de climatisation de conception simple, parfaitement adapté au marché de l'habitat et procurant un fonctionnement souple.

A cet effet, la présente invention a pour objet un dispositif de climatisation comprenant un premier circuit dans lequel circule un premier fluide caloporteur, des moyens pour refroidir ou/et chauffer le premier fluide, ainsi qu'un second circuit dans lequel circule un second fluide caloporteur, traversant au moins un échangeur et comportant un réservoir dans lequel une portion du premier circuit est disposée, des moyens de mesure de la température du second fluide caloporteur de manière à réguler le fonctionnement des moyens de refroidissement ou de chauffage du premier fluide, des moyens d'agitation du second fluide caloporteur dans le réservoir caractérisé en ce que ledit second fluide comprend un seul orifice d'éjection dudit second fluide caloporteur dans le réservoir, ledit orifice étant prévu à l'extrémité d'une partie du second circuit (20) disposée à l'intérieur du réservoir, ladite partie décrivant une portion d'hélice afin d'obtenir un flux tourbillonnant et perturbé à l'intérieur dudit réservoir permettant un meilleur échange entre lesdits premier et second fluides, le réservoir ayant un diamètre adapté pour obtenir un phénomène d'agitation satisfaisant.

De préférence, la portion du premier circuit disposée dans le réservoir se présente sous la forme d'un serpentin.

Avantageusement, le premier fluide caloporteur est du fréon et le second de l'eau.

D'autres caractéristiques et avantages ressortiront de la description qui va suivre du dispositif de l'invention, description donnée à titre d'exemple uniquement, en regard des dessins annexés sur lesquels :

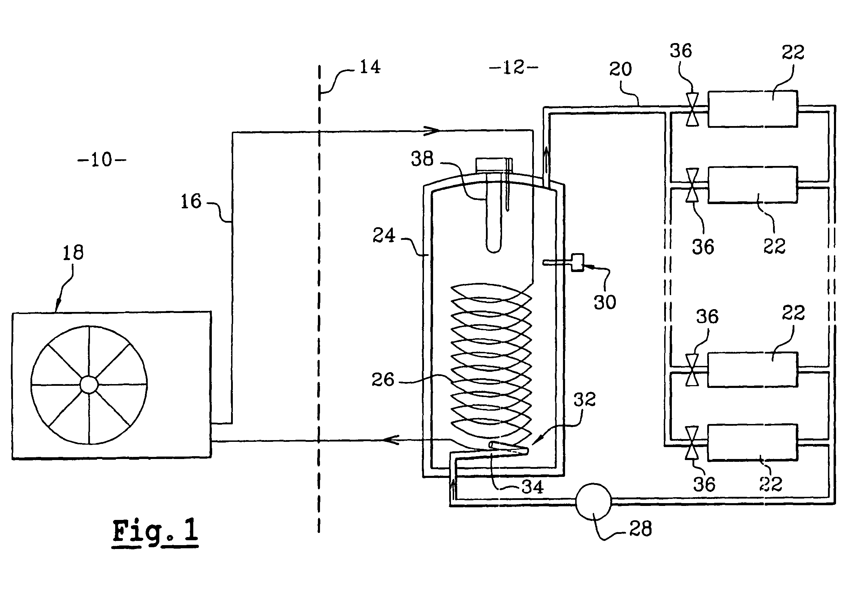

- la figure 1 est une vue schématique d'un dispositif selon l'invention,
- la figure 2 est une vue en coupe selon un plan horizontal du réservoir, et
- la figure 3 est une vue schématique d'une variante du dispositif de l'invention.

On a schématiquement représenté en 10 l'extérieur d'une habitation, et en 12 l'intérieur délimité par un trait en pointillé 14 matérialisant un mur.

Selon l'invention, le dispositif de climatisation comprend un premier circuit 16 dans lequel circule un premier fluide caloporteur, par exemple du fréon, des moyens 18 pour refroidir le premier fluide, appelé par la suite groupe froid, ainsi qu'un second circuit 20 traversant au moins un échangeur 22 disposé à l'intérieur de l'habitation, dans lequel circule un second fluide caloporteur, de préférence de l'eau, ledit second circuit 20 comportant un réservoir 24. Une portion 26 du premier circuit 16, de préférence sous forme de serpentin, est disposée à l'intérieur du réservoir de manière à assurer un transfert thermique entre les premier et second fluides.

Des moyens appropriés, par exemple des pompes 28, sont disposés au niveau de chaque circuit pour assurer la circulation du fluide.

Les caractéristiques techniques du groupe froid sont déterminées par l'homme du métier en fonction des volumes à climatiser et des échangeurs.

Selon une caractéristique essentielle du dispositif, des moyens 30 de mesure de la température du second fluide caloporteur sont prévus, permettant de réguler le fonctionnement du groupe froid 18 en le renseignant sur la température du second fluide, ainsi que des moyens 32 d'agitation du second fluide caloporteur dans le réservoir 24 permettant un meilleur échange entre les premier et second fluides caloporteurs.

Avantageusement, les moyens 30 sous forme d'un capteur de température disposé au niveau du réservoir 24, renseignent les moyens de commande dudit groupe.

Selon les cas, la régulation du groupe peut être faite en « tout ou rien », en fonctionnant par plage de temps, ou de manière variable en ajustant la puissance du groupe.

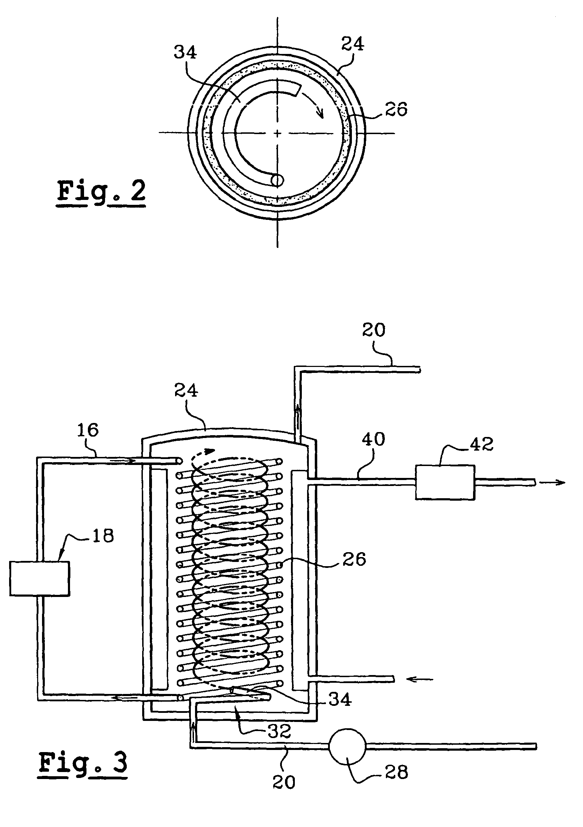

Comme illustré notamment par la figure 2, les moyens 32 d'agitation sont réalisés par des moyens d'injection du second fluide caloporteur dans le réservoir, le second circuit 20 débouchant dans le réservoir 24 sous forme d'un coude 34 permettant d'obtenir pour le second fluide caloporteur un flux tourbillonnant et perturbé dans le réservoir 24. Cet agencement permet de ne pas avoir un flux laminaire a l'intérieur du réservoir et contribue à améliorer les échanges thermiques entre les premier et second fluides caloporteurs, et à accroître ainsi le rendement de l'échangeur thermique ainsi formé par le réservoir 24 et le serpentin 26.

Pour améliorer les échanges thermiques entre les fluides caloporteurs, ces derniers ont des flux à contre courant, par exemple le second fluide caloporteur étant injecté en partie inférieure du réservoir 24 et sortant en partie supérieure alors que le premier fluide caloporteur s'écoule dans le serpentin depuis la partie supérieure du réservoir vers la partie inférieure.

Selon un mode de réalisation préféré, on utilise un groupe froid ayant une puissance de 11 kW, comme premier fluide caloporteur du fréon, un serpentin de 45 mètres de longueur et 9 mm environ de diamètre, ledit serpentin étant introduit dans un réservoir de 80 litres. Les dimensions du réservoir, notamment son diamètre, sont adaptées pour obtenir un phénomène d'agitation satisfaisant.

Le second circuit 20 peut se présenter sous la forme d'une boucle simple traversant un ou plusieurs échangeurs 22 ou comprendre des portions de circuit en parallèle au niveau desquelles sont disposés les échangeurs 22.

Par échangeur 22, on entend tout dispositif susceptible d'assurer un transfert thermique entre le second fluide caloporteur circulant dans le second circuit 20 et son environnement, notamment l'air ambiant présent à proximité dudit échangeur. A titre d'exemple, le ou les échangeurs peuvent se présenter sous la forme d'un radiateur statique sèche-serviette ou mural, d'une cassette plafonnier, d'un ventilo-convecteur, d'un plancher chauffant/rafraîchissant ou analogue.

Selon un mode de fonctionnement en utilisant une régularisation « tout ou rien », le capteur de température 30 mesure la température du second fluide. Dès que la température devient supérieure à un seuil haut prédéterminé, le groupe froid 18 est activé, et le premier fluide circule à débit sensiblement constant, propre au régime dudit groupe, de manière à refroidir le second fluide. De manière similaire, dès que la température devient inférieure à un seuil bas prédéterminé, le groupe froid 18 est désactivé et le premier fluide ne circule plus. Le réservoir 24 permet d'obtenir un effet tampon si bien qu'il est possible de réguler à l'aide de moyens appropriés 36, de manière indépendante, les différents échangeurs 22 et d'obtenir un débit variable du second fluide alors que le débit du premier fluide reste constant lors du fonctionnement du groupe froid.

De manière avantageuse, le dispositif de climatisation de l'invention est réversible et peut aussi bien être utilisé pour refroidir comme mentionné ci-dessus, ou pour chauffer.

Dans ce cas, des moyens pour chauffer le premier fluide caloporteur sont prévus. De manière avantageuse, le groupe 18 est de type réversible et peut aussi bien chauffer que refroidir le premier fluide caloporteur.

Selon une autre caractéristique, des moyens de chauffage 38 annexe, de type résistance électrique par exemple, sont prévus pour chauffer le second fluide caloporteur lorsque le dispositif de l'invention est utilisé pour chauffer. En complément, des moyens de régulation sont prévus pour commander ie fonctionnement des moyens de chauffage 38 selon la température du premier fluide et/ou du second fluide et/ou de la température ambiante.

Des moyens de calorifugeage sont avantageusement prévus au niveau du réservoir 24, du premier et du second circuits de manière à limiter les déperditions thermiques.

Selon une autre variante illustrée par la figue 3, une partie d'un troisième circuit 40 est disposée dans le réservoir 24, un troisième fluide caloporteur circulant dans le troisième circuit 40, par exemple de l'eau chaude destinée à alimenter une habitation. De préférence, la partie du troisième circuit disposée dans le réservoir 24 est agencée de manière à assurer un bon échange thermique entre les deuxième et troisième fluides caloporteurs lorsque les moyens 18 fonctionnent en mode chauffage. Comme illustré par la figure 3, selon un mode de réalisation préféré, la partie du troisième circuit disposée dans le réservoir est constituée par une enceinte disposée au niveau de la paroi latérale du réservoir 24, des chicanes ou des moyens analogues permettant de créer un cheminement pour le troisième fluide caloporteur approprié pour les échanges thermiques entre les deuxième et troisième fluides. Selon cet agencement, avant d'être chauffée par un chauffe-eau 42, l'eau est préchauffée ce qui permet de réduire l'apport en calorie dudit chauffe-eau 42 et confère un gain d'énergie. Avantageusement, le réservoir 24 comprend une double enveloppe, l'enveloppe intérieure contenant le deuxième fluide, le troisième fluide circulant entre les deux enveloppes.

Bien entendu, l'invention n'est évidement pas limitée au mode de réalisation représenté et décrit ci-dessus, mais en couvre au contraire toutes les variantes, notamment en ce qui concerne les dimensions du réservoir , les fluides caloporteur, les moyens de chauffage ou de refroidissement des fluides, la forme des circuits ainsi que le type d'échangeur.

Enfin, un groupe 18 comportant plusieurs sorties peut-être utilisé pour chauffer ou refroidir d'autres dispositifs, notamment plusieurs fluides caloporteurs circulant chacun dans un réservoir tel que précédemment décrit.

## Revendications

1. Dispositif de climatisation comprenant :
- un premier circuit (16) dans lequel circule un premier fluide caloporteur, comportant des moyens (18) pour refroidir ou/et chauffer ie premier fluide,
- un second circuit (20) dans lequel circule un second fluide caloporteur, traversant au moins un échangeur (22) et comportant un réservoir (24),
- une portion (26) dudit premier circuit (16) disposée dans ledit réservoir (24),
- des moyens (30) de mesure de la température du second fluide caloporteur,
- des moyens de commande des moyens (18) de refroidissement et/ou de chauffage du premier fluide en fonction de la température du second fluide caloporteur mesurée par lesdits moyens (30) de mesure,
- des moyens d'agitation du second fluide caloporteur réalisés par des moyens d'injection du second fluide caloporteur dans le réservoir (24),
**caractérisé en ce que**
ledit second circuit (20) comprend un seul orifice d'éjection dudit second fluide caloporteur dans le réservoir (24), ledit orifice étant prévu à l'extrémité d'une partie du second circuit (20) disposée à l'intérieur du réservoir, ladite partie décrivant une portion d'hélice afin d'obtenir un flux tourbillonnant et perturbé à l'intérieur dudit réservoir (24) permettant un meilleur échange entre lesdits premier et second fluides, le réservoir ayant un diamètre adapté pour
obtenir un phénomène d'agitation satisfaisant.

2. Dispositif selon la revendication 1, **caractérisé en ce que** la portion (26) du premier circuit disposée dans le réservoir (24) se présente sous la forme d'un serpentin.

3. Dispositif selon l'une des revendications 1 ou 2, **caractérisé en ce que** le premier fluide caloporteur et le second fluide caloporteur ont des flux à contre courant.

4. Dispositif selon l'une quelconque des revendications 1 à 3, **caractérisé en ce que** le premier fluide caloporteur est du fréon.

5. Dispositif selon l'une quelconque des revendications 1 à 4, **caractérisé en ce que** le second fluide caloporteur est de l'eau.

6. Dispositif selon l'une quelconque des revendications 1 à 5, **caractérisé en ce qu'**il comprend des moyens (38) de chauffage du second fluide caloporteur disposés dans le réservoir (24).

7. Dispositif selon l'une quelconque des revendications 1 à 6, **caractérisé en ce qu'**une partie d'un troisième circuit dans lequel circule un troisième fluide caloporteur, notamment de l'eau destiné à alimenter un chauffe-eau (42), est disposée à l'intérieur du réservoir (24) ou au niveau de sa ou ses parois de manière à permettre un échange thermique entre les second et troisième fluides caloporteurs.

## Claims

1. An air conditioning device comprising:
- a first circuit (16) in which a first heat-transfer fluid circulates, comprising means (18) for cooling and/or heating the first fluid,
- a second circuit (20) in which a second heat-transfer fluid circulates, passing through at least one exchanger (22) and comprising a reservoir (24),
- a portion (26) of said first circuit (16) disposed in said reservoir (24),
- means (30) of measuring the temperature of the second heat-transfer fluid,
- means of controlling the means (18) of cooling and/or heating the first fluid according to the temperature of the second heat-transfer fluid measured by said measuring means (30),
- means of agitation of the second heat-transfer fluid implemented by means of injecting the second heat-transfer fluid into the reservoir (24),
**characterised in that**
said second circuit (20) comprises a single orifice ejecting said second heat-transfer fluid into the reservoir (24), said orifice being provided at the end of a part of the second circuit (20) disposed inside the reservoir, said part describing a portion of a helix in order to obtain a swirling disturbed flow inside said reservoir (24) affording better exchange between said first and second fluids, the reservoir having a diameter adapted to obtain a satisfactory agitation phenomenon.

2. A device according to claim 1, **characterised in that** the portion (26) of the first circuit disposed in the reservoir (24) is in the form of a coil.

3. A device according to one of claims 1 or 2, **characterised in that** the first heat-transfer fluid and the second heat-transfer fluid have flows in opposite directions.

4. A device according to any one of claims 1 to 3, **characterised in that** the first heat-transfer fluid is Freon.

5. A device according to any one of claims 1 to 4, **characterised in that** the second heat-transfer fluid is water.

6. A device according to any one of claims 1 to 5, **characterised in that** it comprises means (38) of heating the second heat-transfer fluid disposed in the reservoir (24) .

7. A device according to any one of claims 1 to 6, **characterised in that** a part of a third circuit in which a third heat-transfer fluid circulates, in particular water intended to supply a water heater (42), is disposed inside the reservoir (24) or at its wall or walls so as to allow heat exchange between the second and third heat-transfer fluids.

## Patentansprüche

1. Klimaanlage umfassend:
- einen ein erstes Kühlmedium führenden ersten Kreislauf (16), welcher Mittel (18) zum Kühlen oder/und Heizen des ersten Mediums aufweist,
- einen ein zweites Kühlmedium führenden zweiten Kreislauf (20), welcher durch mindestens einen Wärmetauscher (22) führt und einen Behälter (24) aufweist,
- einen in dem Behälter (24) angeordneten Abschnitt (26) des ersten Kreislaufs (16),
- Mittel (30) zur Messung der Temperatur des zweiten Kühlmediums,
- Mittel zur Steuerung der Mittel (18) zum Kühlen oder/und Heizen des ersten Mediums in Abhängigkeit von der mit den Messmitteln (30) gemessenen Temperatur des zweiten Kühlmediums,
- Rührmittel zum Rühren des zweiten Kühlmediums, die durch Einspritzmittel des zweiten Kühlmediums in den Behälter (24) verwirklicht werden,
**dadurch gekennzeichnet,**
**dass** der zweite Kreislauf (20) eine einzige Ausstoßöffnung zum Ausstoßen des zweiten Kühlmediums in dem Behälter (24) umfasst, wobei diese Öffnung am Ende eines Teils des zweiten Kreislaufs (20) vorgesehen ist, der innerhalb des Behälters angeordnet ist, wobei dieser Teil ein Schraubensegment beschreibt, um innerhalb des Behälters (24) einen gestörten Wirbelstrom zu erzielen, der einen besseren Austausch zwischen dem ersten und dem zweiten Medium ermöglicht, wobei der Behälter einen Durchmesser aufweist, der dazu geeignet ist, einen zufrieden stellenden Rührvorgang zu erzielen.

2. Anlage nach Anspruch 1, **dadurch gekennzeichnet, dass** der im Behälter (24) angeordnete Abschnitt (26) des ersten Kreislaufs die Form einer Schlange aufweist.

3. Anlage nach Anspruch 1 oder 2, **dadurch gekennzeichnet, dass** das erste Kühlmedium und das zweite Kühlmedium eine gegenläufige Strömung haben.

4. Anlage nach einem der Ansprüche 1 bis 3, **dadurch gekennzeichnet, dass** das erste Kühlmedium Freon ist.

5. Anlage nach einem der Ansprüche 1 bis 4, **dadurch gekennzeichnet, dass** das zweite Kühlmedium Wasser ist.

6. Anlage nach einem der Ansprüche 1 bis 5, **dadurch gekennzeichnet, dass** sie im Behälter (24) angeordnete Mittel (38) zum Aufheizen des zweiten Kühlmediums umfasst.

7. Anlage nach einem der Ansprüche 1 bis 6, **dadurch gekennzeichnet, dass** ein Teil eines dritten Kreislaufs, der ein drittes Kühlmedium, insbesondere Wasser zur Versorgung eines Heißwassergeräts (42), führt, innerhalb des Behälters (24) oder im Bereich seines bzw. seiner Wände angeordnet ist, um einen Wärmetausch zwischen dem zweiten und dem dritten Kühlmedium zu ermöglichen.
